(19) Europäisches Patentamt
European Patent Office
Office européen des brevets

(11) **EP 3 889 210 B1**

(12) **EUROPEAN PATENT SPECIFICATION**

(45) Date of publication and mention
of the grant of the patent:
**26.07.2023 Bulletin 2023/30**

(51) International Patent Classification (IPC):
*C08J 9/00* (2006.01)    *C08L 23/10* (2006.01)
*C08L 23/16* (2006.01)    *C08L 23/08* (2006.01)
*C08J 9/12* (2006.01)    *B60N 2/70* (2006.01)

(21) Application number: **19890354.4**

(22) Date of filing: **29.11.2019**

(52) Cooperative Patent Classification (CPC):
(C-Sets available)
**B60N 2/7017; C08J 9/0061; C08J 9/0066;
C08J 9/122; C08J 9/18; C08J 9/232;
C08L 23/0815;** C08J 2201/03; C08J 2203/06;
C08J 2205/044; C08J 2323/16; C08J 2400/26;
C08J 2423/20; C08J 2423/22; C08L 2207/20

(Cont.)

(86) International application number:
**PCT/KR2019/016651**

(87) International publication number:
**WO 2020/111847 (04.06.2020 Gazette 2020/23)**

(54) **FOAM COMPOSITION FOR VEHICLE SEAT CUSHION, FOAM FOR VEHICLE SEAT CUSHION, AND MANUFACTURING METHOD THEREFOR**

SCHAUMSTOFFZUSAMMENSETZUNG FÜR FAHRZEUGSITZKISSEN, SCHAUMSTOFF FÜR FAHRZEUGSITZKISSEN UND HERSTELLUNGSVERFAHREN DAFÜR

COMPOSITION DE MOUSSE DESTINÉE À UN COUSSIN DE SIÈGE DE VÉHICULE, MOUSSE DESTINÉE À UN COUSSIN DE SIÈGE DE VÉHICULE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2018 KR 20180152141**

(43) Date of publication of application:
**06.10.2021 Bulletin 2021/40**

(73) Proprietor: **Lotte Chemical Corporation**
**Seoul, 05551 (KR)**

(72) Inventors:
• **KWON, Yong Jin**
**Daejeon 34110 (KR)**
• **LIM, Sung Hwan**
**Daejeon 34110 (KR)**
• **EOM, Se Yeon**
**Daejeon 34110 (KR)**

(74) Representative: **Germain Maureau**
**12, rue Boileau**
**69006 Lyon (FR)**

(56) References cited:
EP-A1- 1 925 635    JP-A- 2011 132 420
JP-A- 2016 194 024    JP-A- 2017 095 637
KR-A- 20080 006 541    KR-A- 20130 074 805
US-A1- 2004 162 358

(52) Cooperative Patent Classification (CPC): (Cont.)

C-Sets
**C08L 23/0815, C08L 67/02, C08K 2003/265**

**Description**

[Technical Field]

The present invention relates to a foam composition for vehicle seat cushions, foam for vehicle seat cushions, and a method of preparing the same. More specifically, the present invention relates to a foam composition for vehicle seat cushions, which has high elongation and low values in terms of both compressive strength and high-temperature compression set, and exhibits high variation under static load to secure good cushioning and seating performance, foam for vehicle seat cushions, and a method of preparing the same.

[Background Art]

A seat cushion formed of polyurethane-based foam provides no foreign matter feeling, as compared with cushions of other materials, and has advantages of good cushioning performance and material resilience. However, when the polyurethane-based foam is applied to a seat cushion for vehicles, the seat cushion can sink depending on the weight of the human body in an accident, thereby causing increase in impact.
To prevent such a problem, a typical seat cushion for vehicles includes a metal frame or a metal wire formed to surround the polyurethane-based foam through overmolding, or has a structure wherein the polyurethane-based foam is attached to and/or fitted into the metal frame or the metal wire. In this structure, however, the total weight of the seat cushion is increased due to the metal frame or the metal wire, thereby making it difficult to achieve weight reduction of the vehicle.
Accordingly, in recent years, there is proposed a technique for manufacturing a seat cushion, in which foam particles prepared by replacing some of the polyurethane material with an olefin resin are fused with steam in a mold to omit a support frame or wire. However, it is difficult for the seat cushion manufactured using the olefin resin to realize good cushioning and seating performance.
For example, although various attempts have been made to realize a material having good cushioning performance while omitting the metal wire by blending various kinds of resins, such as modified olefin resins, metallocene resins, amorphous polypropylene resins, and the like, some olefin-based resins have high melting points, causing difficulty in production of a foam product through blending.
The background technique of the present invention is disclosed in Korean Patent Registration No. 1357937. EP 1 925 635 reports details of expanded beads and foamed molded article, whereby the expanded beads are of a polypropylene resin composition.

[Disclosure]

[Technical Problem]

It is one object of the present invention to provide a foam composition for vehicle seat cushions, which has high elongation and low values in terms of both compressive strength and high-temperature compression set, and exhibits high variation under static load to secure good cushioning and seating performance, foam for vehicle seat cushions, and a method of preparing the same.
The above and other objects of the present invention can be achieved by the present invention described below.

[Advantageous Effects]

The present invention provides a foam composition for vehicle seat cushions, which has high elongation at high temperature, low values in terms of both compressive strength and high-temperature compression set, and high variation under static load to secure good cushioning and seating performance, foam for vehicle seat cushions, and a method of preparing the same.

[Description of Drawings]

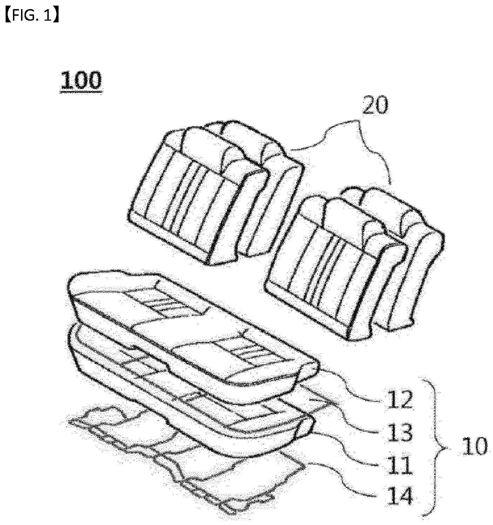

FIG. 1 is a view of a typical vehicle seat cushion.

[Best Mode]

As used herein to represent a specific numerical range, the expression "a to b" means "$\geq$ a and $\leq$ b".
One aspect of the present invention relates to a foam composition for vehicle seat cushions, which includes:

49.5 wt% to 80 wt% of (A) a polypropylene resin; 19.5 wt% to 50 wt% of (B) a modified olefin elastomer resin having a melting point (Tm) of 60°C to 110°C and a melting index (MI) of 0.5 g/10 min to 4 g/10 min, as measured at 190°C under a load of 2.16 kg in accordance with ASTM D1238; and 0.1 wt% to 0.5 wt% of (C) a filler. With this structure, the foam composition for vehicle seat cushions according to the present invention can provide foam for vehicle seat cushions, which has high elongation and low values in terms of both compressive strength and high-temperature compression set, and exhibits high variation under static load to secure good cushioning and seating performance.

The foam composition for vehicle seat cushions may be free from a chemical expansion agent. Such a foam composition for vehicle seat cushions allows application of physical expansion without the chemical expansion agent, thereby realizing non-toxicity while reducing generation of volatile materials in the seat cushion for vehicles through omission of toxic materials.

As used herein, the chemical expansion agent refers to an expansion agent that generates nitrogen gas, for example, a nitrogen-containing organic expansion agent, such as hydrazide, dinitrosopentamethylenetetramine, p-toluenesulfonyl semicarbazide, 5-phenyltetrazole, and the like.

The foam composition for vehicle seat cushions may further include at least one selected from among a dispersion medium for physical formation of foam, an additive and a physical expansion agent. Such a foam composition for vehicle seat cushions allows application of physical expansion without the chemical expansion agent, thereby realizing non-toxicity while reducing generation of volatile materials in the seat cushion for vehicles through omission of toxic materials.

In one embodiment, the dispersion medium may include at least one selected from water, ethylene glycol, glycerin, methanol and ethanol. With the dispersion medium, the foam composition can be advantageously expanded to a sufficient size while realizing better cushioning and seating performance through improvement in expansion and dispersion properties of the foam composition for vehicle seat cushions.

The dispersion medium may be present in an amount of 0.001 parts by weight to 500 parts by weight, specifically 0.1 to 300 parts by weight, more specifically 0.01 to 100 parts by weight, relative to 100 parts by weight of the foam composition for vehicle seat cushions. With this range, the dispersion medium can further improve characteristics provided by the additive without deterioration in properties of the foam composition for vehicle seat cushions.

In one embodiment, the additive may include, for example, a dispersant, a nucleating agent, dyes, a heat stabilizer, a UV absorbent, an antioxidant, a cell stabilizer, a cell regulator, and lubricants, without being limited thereto.

By way of example, the dispersant may include anionic surfactants, such as sodium dodecylbenzenesulfonate and sodium oleate; aluminum sulfate, and the like. These may be used alone or as a mixture thereof. With the dispersant, the foam composition can be advantageously expanded to a sufficient foam size while realizing better cushioning and seating performance through improvement in expansion and dispersion properties of the foam composition for vehicle seat cushions.

The additive may be present in an amount of 0.001 parts by weight to 10 parts by weight, specifically 0.01 to 5 parts by weight, more specifically 0.1 to 5 parts by weight, relative to 100 parts by weight of the foam composition for vehicle seat cushions. With this range, the additive can have further improved characteristics without deterioration in properties of the foam composition for vehicle seat cushions.

In one embodiment, the physical expansion agent may include, for example, propane, normal butane, isobutane, normal pentane, isopentane, cyclopentane, normal hexane, isohexane, cyclohexane, carbon dioxide, oxygen, and nitrogen, without being limited thereto.

The physical expansion agent may be present in an amount of 1 part by weight to 200 parts by weight, specifically 1 to 100 parts by weight, more specifically 10 to 80 parts by weight, relative to 100 parts by weight of the foam composition. Within this range, the foam composition allows easy regulation of an expanded-cell size while further improving expandability.

In the foam composition for vehicle seat cushions, the (A) polypropylene resin may be present in a greater amount than the (B) modified olefin elastomer resin. As a result, the foam composition can secure advantageous characteristics for application of physical expansion without a chemical expansion agent.

In some embodiments, in the foam composition for vehicle seat cushions, ethylene may be present in an amount of 60 wt% or less, specifically 5 wt% to 60 wt%, more specifically 30 wt% to 45 wt%. Within this range, the foam composition can secure advantageous characteristics for application of physical expansion without a chemical expansion agent, while securing high elongation, low values in terms of both compressive strength and high-temperature compression set, and high variation under static load.

The content of ethylene may be measured by an FT-IR analysis method.

**(A) Polypropylene resin**

In the foam composition according to the present invention, the (A) polypropylene resin may be a copolymer of an ethylene monomer and a propylene monomer, without being limited thereto. In this case, the (A) polypropylene resin can improve elongation at high temperature while securing a low high-temperature compression set, as compared with a typical material for vehicle seat cushions, for example, a polyurethane material.

In one embodiment, the polypropylene resin may include an ethylene-propylene random copolymer.

In the ethylene-propylene random copolymer, the ethylene monomer may be present in an amount of 2 wt% to 5 wt%, specifically 3 wt% to 5 wt%, more specifically 3 wt% to 4 wt%. Within this range, the ethylene-propylene random copolymer can further improve elongation and cushioning performance of the foam composition for vehicle seat cushions.

In the ethylene-propylene random copolymer, the propylene monomer may be present in an amount of 95 wt% to 98 wt%, specifically 95 wt% to 97 wt%, more specifically 96 wt% to 97 wt%. Within this range, the ethylene-propylene random copolymer can further improve elongation and cushioning performance of the foam composition for vehicle seat cushions.

The (A) polypropylene resin may have a weight average molecular weight of 10,000 g/mol to 1,000,000 g/mol, specifically 50,000 g/mol to 800,000 g/mol, more specifically 50,000 g/mol to 500,000 g/mol. Within this range, the polypropylene resin can further improve elongation and cushioning performance of the foam composition for vehicle seat cushions.

The (A) polypropylene resin may have a number average molecular weight of 10,000 g/mol to 1,000,000 g/mol, specifically 50,000 g/mol to 800,000 g/mol, more specifically 50,000 g/mol to 500,000 g/mol. Within this range, the polypropylene resin can further improve elongation and cushioning performance of the foam composition for vehicle seat cushions.

The molecular weight is a value measured by gel permeation chromatography based on standards for measurement of the weight average molecular weight or the number average molecular weight.

The polypropylene resin may have a molecular weight distribution (Mw/Mn) of 1 to 10, specifically 1.5 to 8, more specifically 2 to 3. Within this range, the polypropylene resin can further improve elongation and cushioning performance of the foam composition for vehicle seat cushions.

In the foam composition according to the present invention, the (A) polypropylene resin may be present in an amount of 49.5 wt% to 80 wt%. If the content of the (A) polypropylene resin is less than 49.5 wt%, the foam composition can suffer from deterioration in heat resistance and mechanical properties, and if the content of the (A) polypropylene resin exceeds 80 wt%, the foam composition can suffer from excessive increase in compressive strength and has difficulty in application to the foam composition for vehicle seat cushions. In one embodiment, the (A) polypropylene resin may be present in an amount of 55 wt% to 75 wt%, more specifically 60 wt% to 70 wt%. With this content of the polypropylene resin, the foam composition for vehicle seat cushions can realize further improvement in cushioning and seating performance.

### (B) Modified olefin elastomer resin

In the foam composition according to the present invention, the (B) modified olefin elastomer resin has low density and high elasticity to improve cushioning and seating performance while maintaining low compression set and compressive strength, as compared with a typical material for vehicle seat cushions, for example, a polyurethane material.

The (B) modified olefin elastomer resin may include at least one selected from among ethylene-butene rubber (EBR) and ethylene-octane rubber (EOR). These modified olefin elastomer resins may be used alone or as a mixture thereof. The modified olefin elastomer resin can further improve cushioning and seating performance of the foam composition for vehicle seat cushions.

In one embodiment, the ethylene-butene rubber may include 10 wt% to 90 wt% of an ethylene-derived monomer and 10 wt% to 90 wt% of a butene-derived monomer. Within this range, the modified olefin elastomer resin can improve expansion properties of the foam composition at high temperature while further reducing the compression set.

In one embodiment, the ethylene-octane may include 10 wt% to 90 wt% of an ethylene-derived monomer and 10 wt% to 90 wt% of an octene-derived monomer. Within this range, the modified olefin elastomer resin can improve expansion properties of the foam composition at high temperature while further improving mechanical properties.

The (B) modified olefin elastomer resin may have a melting point $T_m$ of 60°C to 110°C. If the melting point of the (B) modified olefin elastomer resin is less than 60°C, it can be difficult to form foam at a processing temperature, and if the melting point of the (B) modified olefin elastomer resin exceeds 110°C, the foam can suffer from deterioration in compression set at high temperature, tensile strength, compressive strength, elongation, and the like. In one embodiment, the (B) modified olefin elastomer resin may have a melting point $T_m$ of 60°C to 110°C, more specifically a melting point of 90°C to 105°C. Within this range, the modified olefin elastomer resin can improve expansion properties, cushioning and seating performance of the foam composition while securing balance between cushioning and seating performance.

The melting point ($T_m$) is measured by differential scanning calorimetry (DSC) in accordance with ASTM D3418.

The (B) modified olefin elastomer resin may have a melting index (MI) of 0.5 g/10 min to 4 g/10 min. If the MI of the (B) modified olefin elastomer resin is less than 0.5 g/10 min, it can be difficult to form foam at a processing temperature, and if the MI of the (B) modified olefin elastomer resin exceeds 4 g/10 min, the foam can suffer from deterioration in compression set at high temperature, tensile strength, compressive strength, elongation, and the like.

In one embodiment, the (B) modified olefin elastomer resin may have a melting index (MI) of 0.5 g/10 min to 3 g/10 min, more specifically 0.5 g/10 min to 1 g/10 min. Within this range, the modified olefin elastomer resin can further improve expansion properties and can secure cushioning and seating performance of the foam composition while providing balance therebetween.

The melting index (MI) is measured at 190°C under a load of 2.16 kg in accordance with ASTM D1238.

In the foam composition for vehicle seat cushions according to the present invention, the (B) modified olefin elastomer resin may be present in an amount of 19.5 wt% to 50 wt%. If the content of the (B) modified olefin elastomer resin is less than 19.5 wt%, it is difficult to realize a seat cushion due to deterioration in expansion properties of the foam composition, and if the content of the (B) modified olefin elastomer resin exceeds 50 wt%, the high temperature compression set of the foam composition is increased, thereby making it difficult for the foam composition to be applied to foam for vehicle seat cushions. In one embodiment, the (B) modified olefin elastomer resin may be present in an amount of 25 wt% to 45 wt%, more specifically 30 wt% to 40 wt%. Within this range, the modified olefin elastomer resin can further improve cushioning and seating performance of the foam composition for vehicle seat cushions while realizing balance therebetween.

## (C) Filler

The (C) filler serves to improve heat resistance and mechanical properties of the foam composition for vehicle seat cushions.

Specifically, the (C) filler may include talc, clay, calcium carbonate, wollastonite, calcium sulfate, magnesium oxide, calcium stearate, mica, calcium silicate, carbon black, silica, kaolin, zinc borate, and organic particles. These fillers may be used alone or as a mixture thereof. These fillers can improve heat resistance and mechanical properties of the foam composition for vehicle seat cushions.

More specifically, the (C) filler may include at least one selected from among kaolin, talc, silica, zinc borate, and clay. These fillers can realize balance between heat resistance and mechanical properties of the foam composition while improving heat resistance and mechanical properties of the foam composition.

For example, the (C) filler may have a spherical shape, a hollow shape, a flake shape, and an acicular shape, without being limited thereto. These fillers can secure good dispersion to realize balance between heat resistance and mechanical properties of the foam composition while improving workability in extrusion and/or injection molding.

The (C) filler may have an average particle diameter (D50) of 1 $\mu$m to 30 $\mu$m, specifically 1 $\mu$m to 20 $\mu$m, or 5 $\mu$m to 30 $\mu$m. Within this range, the fillers can secure good dispersion to realize balance between heat resistance and mechanical properties of the foam composition while improving workability in extrusion, injection molding and expansion.

The average particle diameter (D50) means a number average particle diameter D50 (a particle diameter corresponding to 50% in a particle number distribution curve), measured by a particle analyzer.

The (C) filler may be, for example, organically modified fillers, but is not limited thereto. Here, organic modification may be performed by any method well-known in the art without limitation. With the organically modified fillers, the foam composition for vehicle seat cushions can realize balance between heat resistance and mechanical properties while reducing the content of the fillers, thereby enabling reduction in specific gravity and securing weight reduction.

In the foam composition for vehicle seat cushions according to the present invention, the (C) filler may be present in an amount of 0.1 wt% to 0.5 wt%. If the content of the (C) filler is less than 0.1 wt%, the foam composition can suffer from deterioration in heat resistance and mechanical properties, and if the content of the (C) filler exceeds 0.5 wt%, the foam composition can suffer from poor flowability and moldability. In one embodiment, the (C) filler may be present in an amount of 0.2 parts by weight to 0.5 parts by weight, more specifically 0.2 parts by weight to 0.3 parts by weight. Within this range, the fillers can realize balance between heat resistance and mechanical properties of the foam composition while improving heat resistance and mechanical properties of the foam composition.

A further aspect of the present invention relates to foam for vehicle seat cushions produced through physical expansion of the foam composition for vehicle seat cushions described above.

FIG. 1 is a schematic view of a typical seat cushion for vehicles. Referring to FIG. 1, a typical seat cushion 100 includes a seat back 20 and a cushion 10 disposed under the seat back. Here, the cushion 10 is provided to the bottom of a rear seat of a vehicle and serves to support a lower body including the thigh of an occupant.

In addition, the typical seat cushion 100 may include a seat cushion foam 11, a cover 12 disposed above the seat cushion foam 11, and a metal wire 13 or a metal frame 14 formed to surround the seat cushion foam 11 through overmolding.

The foam for vehicle seat cushions according to the present invention may be used as the seat cushion foam 11 disposed at the bottom of the rear seat (two-row seats) of the vehicle. In this structure, the foam for vehicle seat cushions according to the present invention can realize excellent cushioning and seating performance so as not to provide a burden to the human body even when supporting the load of passengers for a long time while allowing omission of the heavy metal wire 13 or the metal frame 14.

The foam for vehicle seat cushions according to the present invention may have an average expanded-cell size of 1 $\mu$m to 150 $\mu$m. Within this range, the foam can be expanded to a sufficient thickness so as to support the load of passengers for a long time while realizing excellent softness so as not to provide a burden to the human body.

The average expanded-cell size may be calculated by measuring the cell size within a unit area by photographing a foam specimen with an optical electron microscope or a scanning electron microscope (SEM), followed by averaging the cell size.

The foam for vehicle seat cushions may have a compressive strength of 0.4 kg/cm$^2$ to less than 1.4 kg/cm$^2$, as measured in accordance with ISO 844, and a high-temperature compression set of less than 50%, as measured in accordance with ISO 1856-A. Within this range, the foam can realize excellent softness so as not to provide a burden to the human body while supporting the load of passengers for a long time, and can further improve cushioning and seating performance of the cushion seat while allowing omission of the heavy metal wire or the metal frame.

The foam for vehicle seat cushions may have an elongation of 40% or more, specifically 40% to 150%, more specifically 40% to 100%, as measured in accordance with ISO 1798. Within this range, the foam can realize excellent softness so as not to provide a burden to the human body while supporting the load of passengers for a long time, and can further reduce a risk of additional injury in an accident through increase in elongation.

The foam for vehicle seat cushions may have a variation of 30 mm to 80 mm, specifically 30 mm to 60mm, more specifically 30 mm to 50 mm, as measured under a load of 55kgf in accordance with KS R 1080. Within this range, the foam can realize excellent softness so as not to provide a burden to the human body while supporting the load of passengers for a long time, and can further improve cushioning and seating performance of the cushion seat.

Compressive strength, compression set at high temperature and elongation are measured by methods described in the following examples.

A further aspect of the present invention relates to a method of preparing foam for vehicle seat cushions, which includes physically expanding the foam composition for vehicle seat cushions described above.

Expansion of the foam composition for vehicle seat cushions may be performed by any physical expansion excluding chemical expansion without limitation.

Physical expansion of the foam composition includes preparing an extrudate through extrusion of the foam composition for vehicle seat cushions, and placing the extrudate, a dispersion medium, an additive, and a physical expansion agent in a reactor, followed by expansion to an average cell size of 1 $\mu$m to 150 $\mu$m.

For physical expansion of the foam composition, the foam composition is placed in an extruder at a temperature of, for example, 100°C to 250°C, and extruded in the form of, for example, pellets having a length of 1.4 mm to 1.65 mm, a thickness of 0.75 mm to 1.0 mm, and a weight of 0.1 mg to less than 1.5 mg. Under these conditions, the foam composition can have further improved expandability to be expanded to a sufficient size while realizing better cushioning and seating performance.

Details of the dispersion medium, the additive and the physical expansion agent used in expansion are the same as those described above.

By way of example, the foam composition for vehicle seat cushions including: the (A) polypropylene resin; the (B) modified olefin elastomer resin having a melting point (Tm) of 60°C to 110°C and a melting index (MI) of 0.5 g/10 min to 4 g/10 min, as measured at 190°C under a load of 2.16 kg in accordance with ASTM D1238; and the (C) filler is subjected to extrusion into pellets, which in turn are placed together with water as a dispersion medium, an anionic surfactant as a dispersant, and carbon dioxide as a physical expansion agent in a reactor, followed by physical expansion. This method can realize non-toxicity, can reduce generation of volatile materials in the seat cushion, and can further improve expandability of the foam composition to further increase elongation and variation under static load while further reducing compressive strength and high-temperature compression set.

Expansion may be performed at a temperature of 140°C to 147°C and a pressure of 30 kg/cm$^2$ to 60 kg/cm$^2$. Under these conditions, the foam composition for vehicle seat cushions can have further improved expandability to be expanded to a sufficient size while realizing better cushioning and seating performance.

The foam for vehicle seat cushions produced by this method may have a compressive strength of 0.4 kg/cm$^2$ to less than 1.4 kg/cm$^2$, as measured in accordance with ISO 844, and a high-temperature compression set of less than 50%, as measured in accordance with ISO 1856-A.

The foam for vehicle seat cushions produced by this method may have an elongation of 40% or more, specifically 40% to 150%, more specifically 40% to 100%, as measured in accordance with ISO 1798.

The foam for vehicle seat cushions produced by this method may have a variation of 30 mm to 80 mm under static load, specifically 30 mm to 60 mm, more specifically 30 mm to 50 mm, as measured under a load of 55 kgf in accordance with KS R 1080.

Compressive strength, compression set at high temperature and elongation are measured by the methods described in the following examples.

Next, the present invention will be described in more detail with reference to some examples. It should be understood that these examples are provided for illustration only and are not to be construed in any way as limiting the invention.

## EXAMPLE

(A) Polypropylene resin
(A1): Manufacturer: SEP-550H, Product name: Lotte Chemical, ethylene content: 4 wt%, propylene content: 96 wt%, melting point: 141°C, molecular average molecular weight (Mw): 250,900, number average molecular weight (Mn): 90,700, molecular weight distribution (Mw/Mn): 2.77
(B) Modified olefin elastomer resin

(B1): Polyolefin elastomer, Manufacturer: LG Chemical, Product name: LUCENE LC090, MI (ASTM D1238, 190°C, load: 2.16 kg): 0.8 g/10 min, Tm: 95°C
(B2): Polyolefin elastomer, Manufacturer: LG Chemical, Product name: LUCENE LC565, MI (ASTM D1238, 190°C, load: 2.16 kg): 5.0 g/10 min, Tm: 36°C

(C) Filler :
Talc, Manufacturer: Koch, Product name: KCM-6300, number average molecular weight: $5.5\pm1.0\ \mu m$

### Example 1

A composition was prepared by placing components in amounts as listed in Table 1 in a reactor, followed by uniformly mixing the components using a kneader.
An extrudate was prepared in the form of pellets each having a weight of less than 1.5 mg by extruding the prepared composition using an extruder and was placed in a reactor together with 70 parts by weight of water as a dispersion medium, 0.05 parts by weight of an anionic surfactant as a dispersant (Manufacturer: Sigma Aldrich, Product name: sodium dodecyl benzenesulfonate, Compound name: sodium dodecyl benzenesulfonate), and 50 parts by weight of carbon dioxide as an expansion agent (Manufacturer: Daesung Industry Gas Co., Ltd., Product name: carbon dioxide, purity: 98%), followed by physical expansion under conditions of 147°C and 45 kg/cm$^2$, thereby preparing foam particles.
The foam particles were placed in a mold formed of a material, such as aluminum, and were fused into an agglomerate through permeation of steam into the foam particles, followed by drying, molding, and property measurement.
For molding, the foam particles were subjected to pre-compression in the mold at a pressure of 2.5 bar for 10 hours and were impregnated with air. The mold formed of aluminum and having a size of 45 cm $\times$ 45 cm $\times$ 5 cm was filled with the foam particles so as to allow steam to permeate into the compressed foam particles. Here, after steam was forced to permeate into the foam particles at a pressure of 3.5 bar for 10 seconds, water having a temperature of 25°C was sprayed onto the surface of the mold for 80 seconds to cool the mold, thereby preparing a square plate-shaped specimen having a size of 45 cm $\times$ 45 cm $\times$ 5.

### Examples 2 to 4

Foams for vehicle seat cushions were prepared in the same manner as in Example 1 except that the compositions were changed as listed in Table 1.

Table 1

| Item | Unit | Example 1 | Example 2 | Example 3 | Example 4 |
|---|---|---|---|---|---|
| (A) | wt% | 59.9 | 59.8 | 59.5 | 79.9 |
| (B1) | wt% | 40 | 40 | 40 | 20 |
| (B2) | wt% | 0 | 0 | 0 | 0 |
| (C) | wt% | 0.1 | 0.2 | 0.5 | 0.1 |
| Total | wt% | 100 | 100 | 100 | 100 |
| FT-IR analysis (ethylene content) | % | less than 40 | less than 40 | less than 40 | less than 25 |

**Comparative Examples 1 to 6**

Foams for vehicle seat cushions were prepared in the same manner as in Example 1 except that the compositions were changed as listed in Table 2.

Table 2

| Item | Unit | Comparative Example 1 | Comparative Example 2 | Comparative Example 3 | Comparative Example 4 | Comparative Example 5 | Comparative Example 6 |
|---|---|---|---|---|---|---|---|
| (A) | wt% | 99.9 | 100 | 99.5 | 39.9 | 79.9 | 59.9 |
| (B1) | wt% | 0 | 0 | 0 | 60 | 0 | 0 |
| (B2) | wt% | 0 | 0 | 0 | 0 | 20 | 40 |
| (C) | wt% | 0.1 | 0 | 0.5 | 0.1 | 0.1 | 0.1 |
| Total | wt% | 100 | 100 | 100 | 100 | 100 | 100 |
| FT-IR analysis (ethylene content) | % | less than 4 | less than 4 | less than 4 | less than 61 | less than 25 | less than 40 |

**<Property Evaluation>**

Properties of the compositions of Examples and Comparative Examples were evaluated and results are shown in Tables 3 and 4. In addition, the size of each of the specimens prepared in Examples and Comparative Examples was adjusted using a hot wire cutter in accordance with the following standards.

(1) High-temperature compression set (%): In accordance with ISO 1856-A, a specimen was compressed to a predetermined height at 70°C and left for 22 hours. Then, a final height of the specimen was measured at room temperature, followed by calculating a high-temperature compression set according to Equation 1.

<Equation 1>

$$\text{High-temperature compression set (\%)} = \left| (A - B)/A \right| \times 100$$

where A denotes an initial height of the specimen having a size of 50 mm $\times$ 50 mm $\times$ 25 mm (length $\times$ width $\times$ height) before testing, that is, 25 mm, and
B denotes a height of the specimen, as measured after the specimen was compressed to 50% (=12.5 mm) of the initial thickness at 70°C, left in a compressed state for 22 hours, and finally left on a tree having a preset thermal conductivity according to the standard for 30 minutes.

(2) Tensile strength and elongation: Tensile strength and elongation were measured in accordance with ISO 1798 (soft foamed polymer material - Measurement method for tensile strength and elongation).

(3) Variation under static load: Variation was measured while applying a load of 55 kgf at 200 mm/min to a specimen in accordance with KS R 1080 (Test method using "iron inkstone type compression plate" among methods for testing cushioning performance of vehicle seats). Variation under static load was measured after attaching polyurethane foam having a preset size to a specimen.

Table 3

| Evaluation results | | | Example 1 | Example 2 | Example 3 | Example 4 |
|---|---|---|---|---|---|---|
| Expansion conditions | Temp | °C | 144 | 144 | 144 | 144 |
| | Pressure | kgf/cm$^2$ | 45 | 45 | 45 | 45 |
| | Magnification | Time | 30 | 30 | 30 | 30 |
| | Cell size (average) | $\mu$m | 150 | 120 | 100 | 150 |
| Properties of molded article | High-temperature compression set | % | 45 | 45 | 45 | 40 |
| | Elongation | % | 40 | 40 | 40 | 40 |
| | Compressive strength | kgf/cm$^2$ | 0.4 | 0.4 | 0.6 | 0.4 |
| Property of stacked structure | Variation under static load | mm | 47 | 38 | 34 | 29 |

Table 4

| Evaluation results | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| Expansion conditions | Temp | °C | 147 | 147 | 147 | 144 | 140 | 140 |
| | Pressure | kgf/cm$^2$ | 45 | 45 | 45 | 45 | 45 | 45 |
| | Magnification | Time | 30 | 30 | 30 | 30 | 30 | 30 |
| | Cell size (average) | μm | 150 | 200 | 100 | 150 | 150 | 150 |
| Properties of molded article | High-temperature compression set | % | 10 | 10 | 10 | 51 (NG) | 50 (NG) | 53 (NG) |
| | Elongation | % | 20 | 20 | 20 | 40 | 40 | 40 |
| | Compressive strength | kgf/cm$^2$ | 1.4 | 1.7 | 1.7 | 0.4 | 0.4 | 0.4 |
| Property of stacked structure | Variation under static load | mm | 25 | 25 | 21 | 34 | 29 | 46 |

As can be seen from Tables 3 and 4, a foam product produced from a foam composition for vehicle seat cushions, which includes 49.5 wt% to 80 wt% of the (A) polypropylene resin; 19.5 wt% to 50 wt% of the (B) modified olefin elastomer resin having a melting point (Tm) of 60°C to 110°C; and 0.1 wt% to 0.5 wt% of the (C) filler, as in Examples 1 to 4, had a compressive strength of 0.4 kg/cm$^2$ to less than 1.4 kg/cm$^2$, a high-temperature compression set of less than 50%, and an elongation of 40% or more, and a variation of 30 mm to 80 mm under static load.

Conversely, the foam compositions of Comparative Examples 1 to 3 free from the modified olefin elastomer resin had low elongation and failed to have suitable ranges of compressive strength and high temperature compression set at the same time. In addition, the foam compositions of Comparative Examples 1 to 3 had excessively high compressive strength and exhibited low variation under static load, thereby failing to realize good cushioning and seating performance.

Further, the foam composition of Comparative Example 4 not within the content ranges according to the present invention, and the foam compositions of Comparative Examples 5 and 6 prepared using a modified olefin elastomer resin having a melting point (Tm) of less than 60°C had a high-temperature compression set of greater than 50%. As a result, it could be seen that these foam compositions could not be applied to seat cushions for vehicles.

**Claims**

1.   A foam composition for vehicle seat cushions, comprising:

49.5 wt% to 80 wt% of (A) a polypropylene resin;
19.5 wt% to 50 wt% of (B) a modified olefin elastomer resin having a melting point (Tm) of 60°C to 110°C as measured by differential scanning calorimetry in accordance with ASTM D3418 and a melting index (MI) of 0.5 g/10 min to 4 g/10 min, as measured at 190°C under a load of 2.16 kg in accordance with ASTM D1238; and
0.1 wt% to 0.5 wt% of (C) a filler.

2.   The foam composition for vehicle seat cushions according to claim 1, wherein the (A) polypropylene resin comprises an ethylene-propylene random copolymer comprising 2 wt% to 5 wt% of an ethylene monomer and 95 wt% to 98 wt% of a propylene monomer.

3.   The foam composition for vehicle seat cushions according to claim 1, wherein the (B) modified olefin elastomer resin comprises at least one selected from among ethylene-butene rubber (EBR) and ethylene-octene rubber (EOR).

4.   The foam composition for vehicle seat cushions according to claim 1, comprising: 60 wt% or less of an ethylene-derived unit.

5.   Foam for vehicle seat cushions formed by expanding the foam composition for vehicle seat cushions according to any one of claims 1 to 4.

6. The foam for vehicle seat cushions according to claim 5, wherein the foam has an average expanded-cell size of 1 $\mu$m to 150 $\mu$m.

7. The foam for vehicle seat cushions according to claim 5, wherein the foam for vehicle seat cushions has a compressive strength of 0.4 kg/cm$^2$ to less than 1.4 kg/cm$^2$, as measured in accordance with ISO 844, a high-temperature compression set of less than 50%, as measured in accordance with ISO 1856-A, and a variation of 30 mm to 80 mm under static load, as measured under a load of 55 kgf in accordance with ISO R 1080.

8. The foam for vehicle seat cushions according to claim 5, wherein the foam has an elongation of 40% or more, as measured in accordance with ISO 1798.

9. A method of preparing foam for vehicle seat cushions, comprising: performing physical expansion of the foam composition for vehicle seat cushions according to claims 1 to 4.

10. The method according to claim 9, wherein the physical expansion comprises preparing an extrudate through extrusion of the foam composition for vehicle seat cushions, and placing the extrudate, a dispersion medium, an additive, and a physical expansion agent in a reactor, followed by expansion to an average cell size of 1 $\mu$m to 150 $\mu$m at a temperature of 140°C to 147°C under a pressure of 30 kg/cm$^2$ to 60 kg/cm$^2$.

**Patentansprüche**

1. Schaumstoffzusammensetzung für Fahrzeugsitzpolster, umfassend:

   49,5 Gew.-% bis 80 Gew.-% von (A) einem Polypropylenharz;
   19,5 Gew.-% bis 50 Gew.-% (B) eines modifizierten Olefinelastomerharzes mit einem Schmelzpunkt (Tm) von 60 °C bis 110°C, gemessen durch Differentialabtastkalorimetrie gemäß ASTM D3418, und einem Schmelzindex (MI) von 0,5 g/10 min bis 4 g/10 min,
   gemessen bei 190 °C unter einer Last von 2,16 kg gemäß ASTM D1238; und 0,1 Gew.-% bis 0,5 Gew.-% (C) eines Füllstoffs.

2. Schaumstoffzusammensetzung für Fahrzeugsitzpolster nach Anspruch 1, wobei das (A) Polypropylenharz ein statistisches Ethylen-Propylen-Copolymer umfasst, das 2 Gew.-% bis 5 Gew.-% eines Ethylenmonomers und 95 Gew.-% bis 98 Gew.-% eines Propylenmonomers umfasst.

3. Schaumstoffzusammensetzung für Fahrzeugsitzpolster nach Anspruch 1, wobei das (B) modifizierte Olefinelastomerharz mindestens eines umfasst, das aus Ethylen-Buten-Kautschuk (EBR) und Ethylen-Octen-Kautschuk (EOR) ausgewählt ist.

4. Schaumstoffzusammensetzung für Fahrzeugsitzpolster nach Anspruch 1, umfassend: 60 Gew.-% oder weniger einer von Ethylen abgeleiteten Einheit.

5. Schaumstoff für Fahrzeugsitzpolster, gebildet durch Expandieren der Schaumstoffzusammensetzung für Fahrzeugsitzpolster nach einem der Ansprüche 1 bis 4.

6. Schaumstoff für Fahrzeugsitzpolster nach Anspruch 5, wobei der Schaumstoff eine durchschnittliche expandierte Zellgröße von 1 $\mu$m bis 150 $\mu$m aufweist.

7. Schaumstoff für Fahrzeugsitzpolster nach Anspruch 5, wobei der Schaumstoff für Fahrzeugsitzpolster eine Druckfestigkeit von 0,4 kg/cm$^2$ bis weniger als 1,4 kg/cm$^2$, gemessen gemäß ISO 844, einen Hochtemperaturdruckverformungsrest von weniger als 50 %, gemessen gemäß ISO 1856-A, und eine Variation von 30 mm bis 80 mm unter statischer Last, gemessen unter einer Last von 55 kgf gemäß ISO R 1080, aufweist.

8. Schaumstoff für Fahrzeugsitzpolster nach Anspruch 5, wobei der Schaumstoff eine Dehnung von 40 % oder mehr aufweist, gemessen gemäß ISO 1798.

9. Verfahren zur Herstellung von Schaumstoff für Fahrzeugsitzpolster, umfassend: Durchführen einer physikalischen Expansion der Schaumstoffzusammensetzung für Fahrzeugsitzpolster nach den Ansprüchen 1 bis 4.

**10.** Verfahren nach Anspruch 9, wobei die physikalische Expansion das Zubereiten eines Extrudats durch Extrusion der Schaumstoffzusammensetzung für Fahrzeugsitzpolster und das Einbringen des Extrudats, eines Dispersionsmediums, eines Additivs und eines physikalischen Expansionsmittels in einen Reaktor umfasst, gefolgt von einer Expansion auf eine durchschnittliche Zellgröße von 1 $\mu$m bis 150 $\mu$m bei einer Temperatur von 140 °C bis 147 °C unter einem Druck von 30 kg/cm$^2$ bis 60 kg/cm$^2$.

**Revendications**

**1.** Composition de mousse pour coussins de siège de véhicule, comprenant :

49,5% en poids à 80% en poids de (A) une résine de polypropylène,
19,5% en poids à 50% en poids de (B) une résine élastomère d'oléfine modifiée ayant un point de fusion (Tm) compris entre 60°C et 110°C tel que mesuré par calorimétrie différentielle à balayage conformément à la norme ASTM D3418 et un indice de fluidité (MI) compris entre 0,5 g/10 min et 4 g/10 min, tel que mesuré à 190°C sous une charge de 2,16 kg conformément à la norme ASTM D1238 ; et
0,1% en poids à 0,5% en poids de (C) une charge.

**2.** Composition de mousse pour coussins de siège de véhicule selon la revendication 1, dans laquelle la résine de polypropylène (A) comprend un copolymère aléatoire d'éthylène-propylène comprenant 2% en poids à 5% en poids d'un monomère d'éthylène et 95% en poids à 98% en poids d'un monomère de propylène.

**3.** Composition de mousse pour coussins de siège de véhicule selon la revendication 1, dans laquelle la résine élastomère d'oléfine modifiée (B) comprend au moins un caoutchouc choisi parmi un caoutchouc d'éthylène-butène (EBR) et un caoutchouc d'éthylène-octène (EOR).

**4.** Composition de mousse pour coussins de siège de véhicule selon la revendication 1, comprenant : 60% en poids ou moins d'un motif dérivé de l'éthylène.

**5.** Mousse pour coussins de siège de véhicule formée par expansion de la composition de mousse pour coussins de siège de véhicule selon l'une quelconque des revendications 1 à 4.

**6.** Mousse pour coussins de siège de véhicule selon la revendication 5, dans laquelle la mousse a une taille moyenne de cellules expansées comprise entre 1 $\mu$m et 150 $\mu$m.

**7.** Mousse pour coussins de siège de véhicule selon la revendication 5, dans laquelle la mousse pour coussins de siège de véhicule a une résistance à la compression allant de 0,4 kg/cm$^2$ à moins de 1,4 kg/cm$^2$, telle que mesurée conformément à la norme ISO 844, une déformation rémanente à la compression à haute température inférieure à 50%, telle que mesurée conformément à la norme ISO 1856-A, et une variation comprise entre 30 mm et 80 mm sous charge statique, telle que mesurée sous une charge de 55 kgf conformément à la norme ISO R 1080.

**8.** Mousse pour coussins de siège de véhicule selon la revendication 5, dans laquelle la mousse a un allongement de 40% ou plus, tel que mesuré conformément à la norme ISO 1798.

**9.** Procédé de préparation de mousse pour coussins de siège de véhicule, comprenant :
la réalisation de l'expansion physique de la composition de mousse pour coussins de siège de véhicule selon les revendications 1 à 4.

**10.** Procédé selon la revendication 9, dans lequel l'expansion physique comprend la préparation d'un extrudat par extrusion de la composition de mousse pour coussins de siège de véhicule, et le placement de l'extrudat, d'un milieu de dispersion, d'un additif et d'un agent d'expansion physique dans un réacteur, suivi par l'expansion à une taille moyenne de cellules comprise entre 1 $\mu$m et 150 $\mu$m à une température comprise entre 140°C et 147°C sous une pression comprise entre 30 kg/cm$^2$ et 60 kg/cm$^2$.

【FIG. 1】

**100**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1357937

- EP 1925635 A